(19)

Europäisches
Patentamt
European
Patent Office
Office européen
des brevets

(11) **EP 1 944 581 B1**

(12) **EUROPEAN PATENT SPECIFICATION**

(45) Date of publication and mention
of the grant of the patent:
**07.09.2011 Bulletin 2011/36**

(51) Int Cl.:
***G01D 5/14*** *(2006.01)*

(21) Application number: **07100545.8**

(22) Date of filing: **15.01.2007**

(54) **Distance, orientation and velocity measurement using multi-coil and multi-frequency arrangement**

Messung von Entfernung, Orientierung und Geschwindigkeit mittels einer Anordnung mit mehreren Spulen und Frequenzen

Mesure de distance, d'orientation et de vitesse à l'aide d'un dispositif à bobines et fréquences multiples

(84) Designated Contracting States:
**DE FR GB**

(43) Date of publication of application:
**16.07.2008 Bulletin 2008/29**

(73) Proprietor: **Sony Deutschland GmbH
10785 Berlin (DE)**

(72) Inventor: **Rebmann, Jochen
70327, Stuttgart (DE)**

(74) Representative: **Keck, Stephan et al
Witte, Weller & Partner
Patentanwälte
Königstraße 5
70173 Stuttgart (DE)**

(56) References cited:
| | |
|---|---|
| **WO-A-2004/065896** | **CA-A1- 2 552 178** |
| **GB-A- 2 125 168** | **US-A- 5 532 591** |
| **US-A- 5 796 250** | **US-B1- 6 701 179** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of Invention

The present invention relates to the field of orientation measurement, in particular the orientation of an object in a magnetic field and in a 3-dimensional space.

### Problem

The measurement of the position, orientation and/or speed of objects in a 3-dimensional space can be performed by different devices, using e.g. light or electricity or magnetism or any other suitable medium. A magnetic field has the advantage to be not susceptible to electrostatic charged surfaces, which is not the case for electric fields. Light itself can be blocked by almost any material making flexible solutions for measuring the orientation and/or position difficult. In the field of magnetism a magnetic field is normally generated by a coil due to electromagnetism and said magnetic field induces a voltage in another coil, also called receiver coil, under the premise that the magnetic field strength changes in the receiver coil. It is clear that a non-moving receiver coil is not capable to measure a non-altering magnetic field since no voltage is induced by said magnetic field.

There are already means, which can measure a position and/or orientation of a receiver means in relation to a specific magnetic field generating means. To measure the orientation in a 3-dimensional space normally three orthogonal arranged probes are used to calculate the Cartesian coordinates. These arrangements are most of the time very bulky and space taking.

Also the construction of the magnetic field generating means and of the magnetic field receiver means, specifically the arrangement of the coils has to be taken into account to evaluate the received information of the received magnetic field and associate the information to a specific orientation of one of the means.

### State of the Art

The calculation of the orientation of a coil within a magnetic field is done normally by the use of coils that are arranged in an orthogonal way. The induced voltage in a coil is depending, among other factors, on the "angle of arrival" of the magnetic field lines.

Thales is holding a patent (WO 2004/065896 A1) on "Method and device for magnetic measurement of the position and orientation of a mobile object relative to a fixed structure". This patent covers the usage of 3 orthogonal coils for distance and orientation measurement. In US 6 701 179 two sets of coils are operated at the same frequency. The object of the present invention is to provide a magnetic field measuring device which is small, can identify the distance, the orientation and the velocity of specific objects and which is mountable on mobile objects.

### Summary of the Invention

The present invention relates to a magnetic field generating apparatus operable to generate a magnetic field which comprises at least three coils operable to generate a magnetic field, respectively, said magnetic fields being modulated with different frequencies, respectively, wherein each of said coils has a symmetry axis and the symmetry axis of at least two of said coils are parallel.

Favourably at least two of said symmetry axes are non-identical.

Favourably each of said coils has a plane perpendicular to said symmetry axis, said plane is extending through the bottom of the respective coil and all planes of said coils are arranged to form a common plane, whereby all coils are located on the same side of the common plane.

Favourably the first and the second coil lie on a first straight line and the second and the third coil lie on a second straight line, whereby the first line is perpendicular to the second line.

Favourably the first, the second and the third coil lie on a first straight line and the fourth, the second and the fifth coil lie on a second straight line, whereby the first line is perpendicular to the second line.

Favourably said magnetic field generating apparatus comprises a pad, said pad being operable to carry said coils at a specific position.

Favourably said pad comprises a central pad operable to carry one coil, at least two outer pads operable to carry said coils, respectively, and at least two pad conjunctions operable to connect to said central pad and said respective outer pads.

Favourably said pad is flexible and/or stretchable and thus placeable on a non-planar surface before the point of a predetermined usage of the magnetic field generating apparatus.

Favourably at least one coil is operable to provide a uni- or bidirectional communication link by means of said magnetic field.

Additionally the present invention relates to a respective magnetic field receiver device which is operable to receive magnetic fields, said magnetic fields being modulated with different frequencies, respectively, said magnetic field receiver device comprising at least one coil operable to receive said magnetic fields and measure the strength of said magnetic fields.

Favourably said magnetic field receiver device comprises as many coils as said magnetic field generating apparatus, whereby said coils are located vis-à-vis to the coils of said magnetic field generating apparatus during the point of an initialisation of said magnetic field receiver device, said initialisation determines the magnetic field strength at a reference position.

Favourably said coils are operable to receive a respective frequency modulated magnetic field.

In the end the present invention relates to a respective magnetic field measuring system operable to measure a relative position, orientation and/or velocity, said magnetic field measuring system comprising said magnetic field generating apparatus and a magnetic field receiver device.

Further more the present invention relates to another magnetic field receiver apparatus which is operable to receive a magnetic field, said magnetic field being modulated with different frequencies, respectively, said magnetic field receiver apparatus comprising at least three coils operable to receive said magnetic field, wherein each of said coils has a symmetry axis and the symmetry axis of at least two of said coils are parallel.

Favourably at least two of said symmetry axes are non-identical.

Favourably each of said coils has a plane perpendicular to said symmetry axis, said plane is extending through the bottom of the respective coil and all planes of said coils are arranged to form a common plane, whereby all coils are located on the same side of the common plane.

Favourably the first and the second coil lie on a first straight line and the second and the third coil lie on a second straight line, whereby the first line is perpendicular to the second line.

Favourably the first, the second and the third coil lie on a first straight line and the fourth, the second and the fifth coil lie on a second straight line, whereby the first line is perpendicular to the second line.

Favourably said magnetic field receiver apparatus comprises a pad, said pad being operable to carry said coils at a specific position.

Favourably said pad comprises a central pad operable to carry one coil, at least two outer pads operable to carry said coils, respectively, and at least two pad conjunctions operable to connect to said central pad and said respective outer pads.

Favourably said pad is flexible and/or stretchable and thus placeable on a non-planar surface before the point of an initialisation of the magnetic field receiver apparatus, said initialisation determines the magnetic field strength at a reference position.

Favourably at least one coil is operable to provide a uni- or bidirectional communication link by means of said magnetic field.

The present invention also relates to a magnetic field generating device operable to generate a magnetic field, said magnetic field generating device comprising at least one coil operable to generate said magnetic field, said magnetic field being modulated with different frequencies, respectively.

Favourably said magnetic field generating device comprises as many coils as said magnetic field receiver apparatus, whereby said coils are located vis-à-vis to the coils of said magnetic field receiver apparatus during the point of an initialisation of said magnetic field receiver device, said initialisation determines the magnetic field strength at a reference position.

Favourably said coils are operable to generate a respective frequency modulated magnetic field.

In the end the present invention relates to a respective magnetic field measuring system which is operable to measure a relative position, orientation and/or velocity, said magnetic field measuring system comprising said magnetic field receiver apparatus and said magnetic field generating device.

## Description of the Drawings

The features, objects and advantages of the present invention will become more apparent from the detailed description set forth below when taken in conjunction with the drawings, wherein:

Figure 1        shows an example of the principle of mutual coupling between two coils in a magnetic field,

Figure 2        shows an example of a diagram of the magnetic field strength versus the distance,

Figure 3        shows an example of an arrangement of a coil in a parallel magnetic field,

Figure 4      shows an embodiment of the present invention comprising a magnetic field generating apparatus,

Figure 5      shows an example of a circuitry diagram of a magnetic field generatingdevice and a receiver device,

Figure 6      shows an example of a first setup of a magnetic field measuring system including a signal diagram,

Figure 7      shows an example of a second setup of a magnetic field measuring system including another signal diagram,

Figure 8      shows an example of a third setup of a magnetic field measuring system including another signal diagram

Figure 9      shows an example of a fourth setup of a magnetic field measuring system including another signal diagram,

Figure 10     shows an example of a fifth setup of a magnetic field measuring system including another signal diagram,

Figure 11     shows an example of a sixth setup of a magnetic field measuring system including another signal diagram,

Figure 12     shows an example of a seventh setup of a magnetic field measuring system including another signal diagram,

Figure 13     shows an example of a diagram of the magnetic field strength versus the passed time,

Figure 14     shows a subject's hand whereon an embodiment of the present invention is attached to,

Figure 15     shows another embodiment of the present invention comprising another magnetic field generating apparatus, and

Figure 16     shows an example of an eighth setup of a magnetic field measuring system comprising another embodiment of the present invention, said embodiment being operable to receive magnetic fields.

## Detailed Description of the Invention

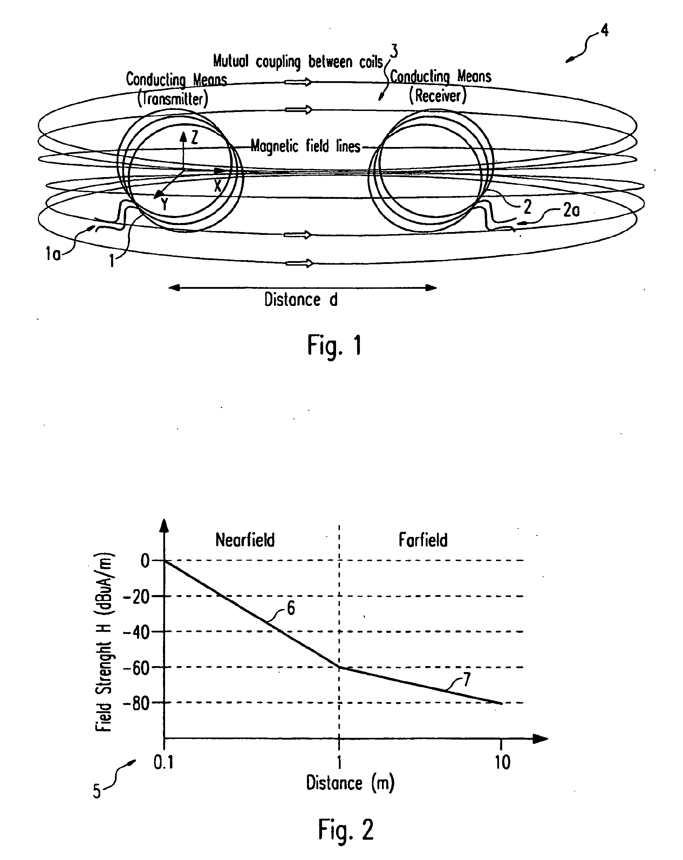

Figure 1 shows a coil arrangement 4 comprising a transmitter coil I and a receiver coil 2. This coil arrangement 4 is showing the mutual coupling between said receiver coil 2 and said transmitter coil 1 by a magnetic field 3, said coils having a distance d to each other. The transmitter coil 1 as well as the receiver coil 2 comprises a transmitter feeder 1a and a receiver feeder 2a, respectively. The receiver coil 2 and the transmitter coil I comprise a specific number of windings, respectively. It is clear that the increased number of windings, increased amount of current and/or the increased diameter of a coil will increase the magnetic field strength regarding the same measuring position. A current is provided to the transmitter coil 1 via said feeder 1a and generates a magnetic field 3 as shown due to the form of the transmitter coil 1. Since the magnetic field 3 is not ideally parallel and decreases in strength with increased distance d to the transmitter coil 1, the change of the magnetic field strength can induce a voltage into the receiver coil 2, when the transmitter coil 1 and/or the receiver coil 2 are moved. In case the current is modulated, thus generating a modulating field, the receiver coil 2 can measure the modulating magnetic field without the necessity to move the transmitter coil 1 and/or the receiver coil 2, said field is concurrently generating an induced voltage and eventually a current based on said voltage in the receiver coil 2.

In the description of the present invention the wording "generating" corresponds to the wording "transmitting" to describe the principle operation of the coils operable to generate a magnetic field, whereby said coils are part of a transmitter device in a transmitter receiver setup. Moreover information can be modulated onto the magnetic field, thus turning the coil to a transmitter.

Figure 2 shows a diagram 5, wherein the field strength versus the distance is recorded based on the coil arrangement 4 of Fig. 1. The x-axis is recorded and shown in common logarithm. In detail, in the distance range of 0,1 meter to 1 meter, also called nearfield 6, the field strength drops with 60 dB (decibel) per decade of distance, while in the distance range of 1 meter to 10 meter. also called farfield 7, the field strength drops with 20 dB per decade of distance. This means that the magnetic field can be measured more easily in the nearfield 6 than in the farfield 7, since the dependency between field strength and the distance is stronger. Also this diagram 5 is idealised by linear approximation to better show the dependency between the field strength and the distance. The nearfield 6 drops linear from 0 dB at 0,1 meter to -60 dB at 1 meter and the farfield 7 drops linear from -60 dB at 1 meter to -80 dB at 10 meter.

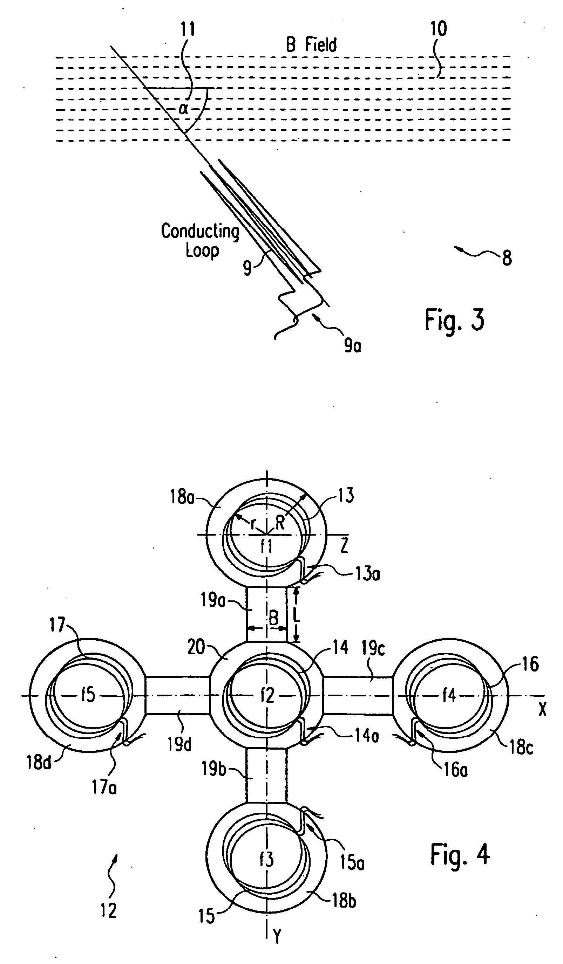

Figure 3 shows a coil in a parallel magnetic field - arrangement 8. The magnetic field 10 is parallel and is arranged to the surface area of the conducting loop 9 in a specific angle $\alpha$ 11. The conducting loop 9 or also called coil comprises a coil feeder 9a. When the loop 9 is introduced into and/or exposed to the magnetic field 10, only a specific component of the magnetic field based on the angle 11 is effective inside the loop 9 and contributes to the induction of an electric voltage in the circular formed loop 9. At angle $\alpha$=90°, when the surface area is perpendicular to the magnetic field 10, the induced voltage is at maximum, while at angle $\alpha$=0°, when the surface area is parallel to the magnetic field 10, the induced voltage is zero. The loop 9 can also be formed in another form like e.g. quadratic and might comprise a specific number of windings. Said current generates a magnetic field, wherein the part of the generated magnetic field, which is inside the loop 9, is directed against the magnetic field 10.

Figure 4 shows a magnetic field generating apparatus 12, whereby five coils 13, 14, 15, 16, 17 are arranged on a pad and said magnetic field generating apparatus 12 is an embodiment of the present invention.

The magnetic field generating apparatus 12 comprises the coils 13, 14, 15, 16, 17 as well as the pad, whereby said coils are arranged in a cross form on said pad. Each coil 13, 14, 15, 16, 17 comprises a respective feeder 13a, 14a, 15a, 16a, 17a which provides the current for generating a magnetic field and/or receives the induced voltage from other altering magnetic fields. The feeders 13a, 14a, 15a, 16a, 17a are constructed in a way to interfere the least as possible with the magnetic field of the coils 13, 14, 15, 16, 17, by e.g. being twisted. The second coil 14 is located in the middle of the cross and has equal distance to the other coils 13, 16, 15, 17. The fifth, the second and the fourth coil 17, 14, 16 are located along the X-axis in a row or also called straight line. The first, the second and the third coil 13, 14, 15 are located along the Y-axis in a row. The X-axis and the Y-axis are perpendicular to each other and intersect in the middle of second coil 14. The first coil 13 comprises at least one winding of conductor wire which is/are formed in a circular way with a radius r. The more windings are formed for the coil 13, the less current is necessary to generate the equal amount of magnetic field strength at the same position. The coils might also be formed in e.g. a quadratic way/form. The coils 13 to 17 might also comprise at least one iron core or powdered iron core to increase the permeability and thus the magnetic flux density of the generated magnetic field. Also the implementation and the usage of additional coils is possible to help improve the accuracy of the movement and/or direction calculation.

In other embodiments the X- and Y-axis do not need to be perpendicular but inclined. Also the respective distance of the outer coils 13, 16, 15, 17 to the central coil 14 might differ to each other. Also the respective diameter of the coils 13 to 17 might vary.

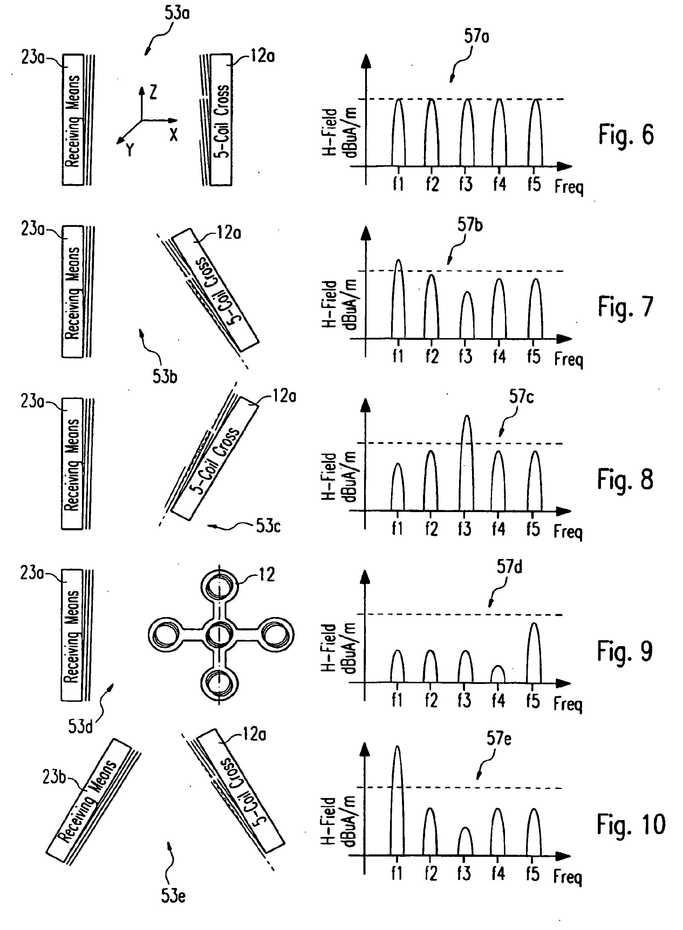

The first coil 13 is located on an outer pad 18a, which is also formed in a circular way and has a radius R. The radius R is bigger than the radius r, but is not restricted to this embodiment. The coils 15, 16, 17 as well as the outer pads 18b, 18c, 18d, whereby said coils 15, 16, 17 are located on said outer pads 18b, 18c, 18d, correspond to the first coil 13 and its outer pad 18a. The second coil 14 is located on a central pad 20, which is circular formed. The central pad 20 is joined to the other outer pads 18a to 18d of the respective coils 13, 16, 15, 17 by means of a respective pad junction 19a, 19b, 19c, 19d. Each pad junction 19a to 19d has parallel sides of the length L and has a width B, said pad junction is operable to keep the coils in a cross form or any other desirable arrangement. The above-mentioned pads can be of any other form and/or material to interfere the least with the magnetic field generated by either the respective coil and/or all the coils 13 to 17. The pads 18a to 18d and 20 might comprise e.g. a hole to safe material and weight, respectively. The whole pad can be bendable and/or flexible and/or stretchable to better adjust said pad to a round or otherwise formed surface like e.g. a hand. If the pad is modified as said, the embodiment should still provide nearly parallel symmetry axis of the coils 13 to 17. If the symmetry axis differ from being parallel, the signal processing is adjusted by using different reference signal levels as described in Fig. 6.

The present invention also proposes to use a magnetic field generating apparatus comprising three or more coils in a flat plane as generating and/or receiving means.

The wording that coils are "in a flat plane" or "on the same plane" means that each coil is located with its bottom on the same side of a common plane, whereby the symmetry axis of the respective coil is perpendicular to said common plane. Eventually every coil has a plane at and extending through the bottom of the coil, said plane being perpendicular to the symmetry axis. In the case of three coils, the coils should be arranged in a rectangular angle to each other to better distinguish the relative location to each other. The rectangular angle means that at least a first and a second coil are on a first straight line, while at least the second and a third coil are on a second straight line, whereby the first straight line is perpendicular to the second straight line. It is emphasised that the two lines have to intersect with each other. But of course in other embodiments different angles and/or arrangements are possible. Favourable for 3 dimensional movement measurements, an embodiment comprises three coils whereby said first and second straight line is spanned by said coils. The second coil is part of both the first and the second straight line, thus both lines are intersecting.

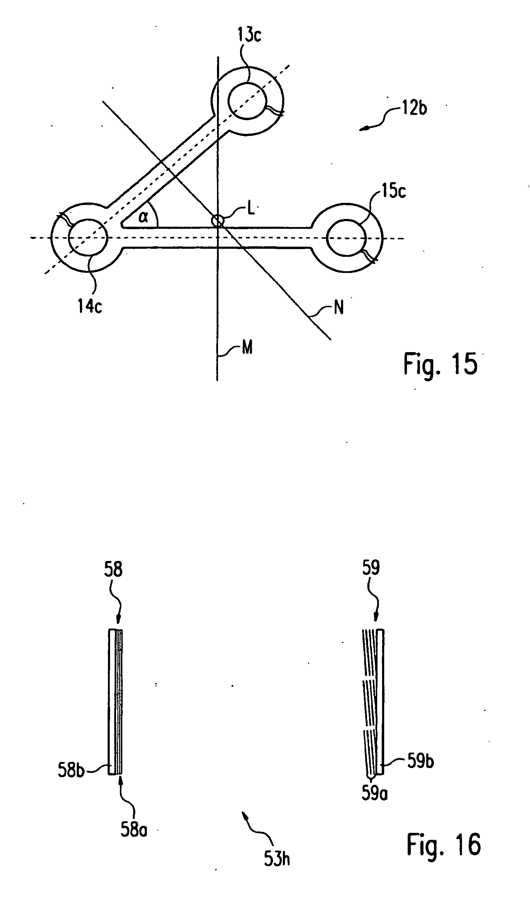

Another embodiment comprising three coils is later shown in Fig. 15. All symmetry axes of the coils 13 to 17 are parallel to each other and the coils are arranged on the same plane and have a flat arrangement. Of course, the coils are not restricted to be placed on the same plane, but can be offset and still comprise parallel symmetry axis; the respective symmetry axis of at least two coils have to be parallel. Offset means in this case that the plane of the one coil is not identical to the common plane of at least two other coils.

In case when all coils are located on the same plane and along the same straight line, only 2 dimensional movements like e.g. along the z-axis and the x-axis, but not along the y-axis are possible to detect unambiguously.

In case when all coils have the same symmetry axis, also only specific measurable movements are possible.

Each coil can have a different resonance frequency (e.g. simple series resonance circuit RC) and/or can be fed by a different frequency signal to generate frequency-modulated magnetic fields. The delta of the carrier frequencies is constant. Furthermore the structure contains (not shown in Fig. 4) the resonance circuit comprising amplification stages like e.g. a digital amplifier, μController for frequency signal generation and power supply like e.g. a battery. Of course, the resonance circuit can also be connected via wires to the coils 13 to 17 and does not need to be located on or behind the cross formed pad of the arrangement 12. Another embodiment comprises a printed circuit board (PCB) as a pad, said PCB carrying the coils and the resonance circuitry; thus instead of wires only microstrip lines are required. The magnetic field generating apparatus is operable to generate magnetic fields modulated with different frequencies by at least three coils. Vice-versa the counterpart of the magnetic field generating apparatus, a magnetic field receiver device, is operable to receive said magnetic fields comprising different frequencies.

In another embodiment the structure of a magnetic field receiver apparatus corresponds to the structure shown in Figure 4, whereby said receiver apparatus is not operable to generate but to receive magnetic fields. When the receiver device and the generator device have the same structure as shown in Fig. 4 and said devices have the same symmetry axis of coil 14, the rotation around said axis can be detected when the coils are arranged in a specific way. The coils 13, 14 and 17 of said devices are arranged vis-à-vis, respectively, while the location of the coils 15 and 16 are switched for either the receiver or the generator device. Thus in case of rotation of one or both of said devices around the common symmetry axis of the coil 14, the relative circular movement as well as the direction can be calculated.

Again, in another embodiment the apparatus is operable to both generate and receive magnetic fields, thus to work also as unidirectional communication link.

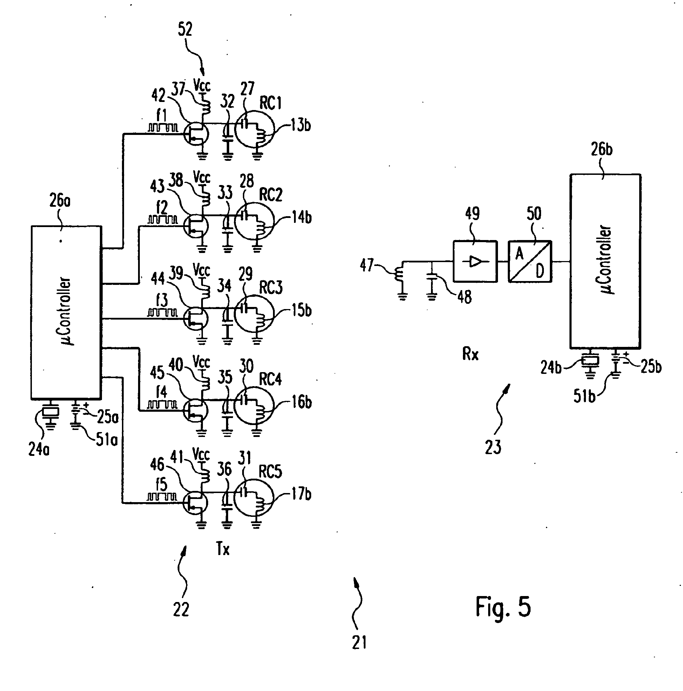

Figure 5 shows an example of a circuit diagram 21 of a magnetic field generating and receiver device comprising a magnetic field generating device 22 and a magnetic field receiver device 23.

The circuit diagram of the magnetic field receiver device 23 comprises a receiving coil 47, a capacity 48, an amplifier 49, an AD converter 50, a μController 26b, an oscillator 24b as well as a battery 25b. The ground 51b connected to the battery 25b corresponds to every ground symbol shown in the circuit diagram of the magnetic field receiver device 23. The receiving coil 47 is connected to the ground 51b as well as to the amplifier 49 and to the capacity 48. The capacity 48 is also connected to the ground 51b. The capacity 48 and the receiving coil 47 form or are a part of a resonance circuit, which processes a preferable frequency $f_0$ or a frequency range $f_1$ to $f_2$. Other frequency signals, which are induced by a modulated magnetic field, are not conducted through said resonance circuit.

The amplifier 49 is connected to the AD converter 50, whereby said converter is connected to the μController 26b. The oscillator 24b is connected to the ground 51 b and to the μController 26b, whereby the battery 25b is connected to the ground 51b and the μController 26b. The battery 25b might be e.g. a low-voltage battery. The amplifier 49 is operable to amplify the received signal based on the received magnetic field. The AD converter 50 is operable to convert the signal received from the amplifier 49 from analogue to digital. The μController 26b is operable to analyse and process the digital signal received from the AD converter 50 and e.g. output a signal diagram as shown in Fig. 6. The oscillator 24b is operable to provide a reference frequency which is needed e.g. for feeding a microprocessor and/or for mixing, analysing and/or processing the received signal.

The magnetic field generating device 22 comprises a μController 26a, an oscillator 24a, a battery 25a, a ground 51a, whereby said μController 26a is connected to the respective coil 13b, 14b, 15b, 16b, 17b. The magnetic field generating device 22 as well as the coils 13b to 17b can correspond to the magnetic field generating apparatus 12 and to the coils 13 to 17 described in Fig. 4. To control the respective coils, the μController 26a sends a respective signal to a respective field effect transistor 42, 43, 44, 45, 46, whereby the respective signal is transmitted to the gate of the respective field effect transistor 42, 43, 44, 45, 46. Furthermore the source of the respective field effect transistor is connected to the ground 51a and the drain is connected to a respective inductive load 37, 38, 39, 40, 41 and to a respective second capacity 32, 33, 34, 35, 36 and to a respective first capacity 27, 28, 29, 30, 31. All field effect transistors 42, 43, 44, 45, 46 are P channel MOSFETs in this Fig. 5, but is not restricted to the present example. The power supply voltage 52 is provided and connected to the respective inductive load 37, 38, 39, 40, 41, respectively. The power supply voltage is based on the voltage of the battery 25a and the ground 51a corresponds to every ground symbol shown in the circuit diagram of the transmitter device 22. The oscillator 24a corresponds to the oscillator 24b in view of an output signal for the respective coils. The μController 26b is operable to provide different signals to the different coils 13b, 14b, 15b, 16b, 17b, said signals might have different frequencies. The signals send to the different coils might be also equal and could be a broadband signal, whereby the respective frequency is later filtered by the RC resonance circuits RC1, RC2, RC3, RC4, RC5 and used for modulating the magnetic field. The resonance circuits RC1, RC2, RC3, RC4, RC5 comprise the coil 13b to 17b and the first capacity 27 to 31 in series, respectively.

A battery-powered μController with a reference oscillator is generating 5 output signals, either analogue or digital pulse-width modulated (PWM), with 5 different carrier frequencies. The signals are then amplified by an amplification stage, e.g. a digital switching amplifier and fed to a matching and resonance circuitry. The receiving coil is within the nearfield of the emitted magnetic field at the used frequencies, since the dependency between field strength and distance in the nearfield is stronger than in the farfield.

The Q (quality) factor of the magnetic field receiving resonance circuit is low in order to make the receiving means broadband enough to gather the induced voltages at the used frequencies. A low noise, broadband amplification stage amplifies the signal and feeds it to an A/D converter. The digitized signal can then be processed in the μController for extraction of the parameters and comparison to the reference values.

Instead of one receiving coil also multiple coils with different resonance frequencies can be used in the magnetic field receiver device 23 to better distinguish the movement of the magnetic field receiver and/or the magnetic field generating device 23, 22. Still several embodiments of the invention benefit from the flat coil arrangement of the magnetic field generating apparatus, meaning that said apparatus is located on a common plane.

The system is not limited to the use of pure continuous wave (CW) carriers. Also modulation and data transfer is possible, unidirectional as well as bi-directional.

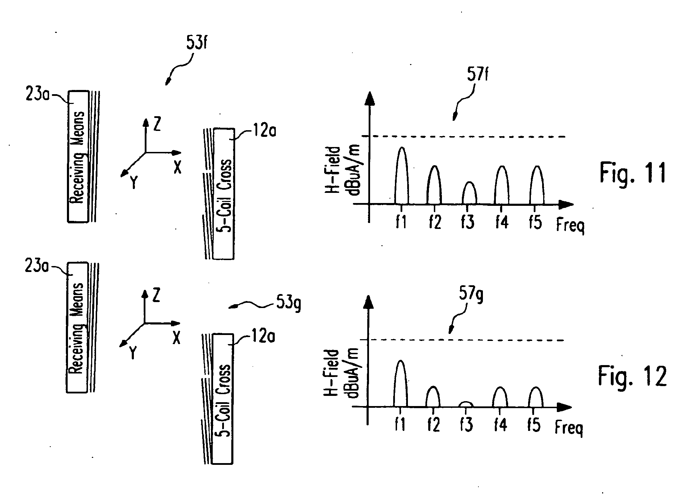

Figures 6 to 10 show different positions, arrangements and/or setups 53a to 53e of magnetic field measuring systems 53; in detail, different scenarios for the measurement of the relative orientation and distance of the magnetic field generating apparatus 12a in respect to the magnetic field receiver device 23a is shown. The magnetic field generating apparatus 12a can correspond to the magnetic field generating apparatus 12 described in Fig. 12 or any other embodiment described in the present invention operable to generate magnetic fields. A training session is required at the beginning to define a reference position and reference orientation and to compensate for the different frequency depending induced voltages. Also a tracking of the movement versus time needs to be done to account for movements in the 3$^{rd}$ axis (z-axis). In the case of Fig. 6 the reference position is shown, wherein the magnetic field generating apparatus 12a or also called 5-coil cross as shown in Figure 4 is parallel and at a certain distance to the magnetic field receiver device 23a. In detail, the symmetry axis of the magnetic field generating apparatus 12a and the magnetic field receiver device 23a correspond to each other or at least said symmetry axis are parallel to each other.

Regarding the x-, y- and z-axis shown in Figure 6, all other arrangements of the magnetic field measuring system 53 are described according to the same Cartesian coordinates.

The induced voltages $V_1$ to $V_5$ can be described as

$$V_1 = 2\pi f_1 SNB_1 Q \cos\alpha_1 \quad \ldots \quad V_5 = 2\pi f_5 SNB_5 Q \cos\alpha_5,$$

whereby
$f_1$ to $f_5$ stands for the different frequencies of the respective transmitter coil,
$\alpha_1$ to $\alpha_5$ stand for the different angles between the symmetry axis of the respective generating coils and the receiver device,
N stands for the number of windings of the receiver device,
S stands for the surface area of the receiver device,
$B_1$ to $B_5$ stands for the field strength in axial direction of the respective generating coil.

For further understanding, the coils 13 to 17 transmit the frequencies $f_1$ to $f_5$, respectively, said frequencies being different to each other.

Figure 6 shows said first setup 53a, wherein a reference position of the magnetic field generating apparatus 12a is described. In the reference position all frequency signals of the respective coils of the magnetic field generating apparatus 12a induce five different frequency modulated voltages into the magnetic field receiver device 23a, said voltages or also thereon based currents having the same level, respectively. Five different frequency signals transmitted by the respective modulated magnetic field are shown in the diagram. The coils of the magnetic field generating apparatus 12a are directed to the receiving coil of the magnetic field receiver device 23a. Since the second coil 14 is directly placed in the middle of the cross and the middle of the cross is directed to the middle of the receiving means 23a, while the other coils 13, 16, 15, 17 are directed to the edge of the receiving means 23a, the signal of the second coil 14 might be stronger than the respective signal of the rest of the coils 13, 16, 15, 17.
When the magnetic field receiver device 23a comprises a coil, which is larger than the magnetic field generating apparatus 12a and/or the receiver device is further away from the generating apparatus, the signals of all the coils 13 to 17 will not or nearly not differ from each other in this position.

Moreover in Figure 6 a first diagram 57a of the magnetic field measuring system is shown, wherein the signals f1 to f5 based on the respective modulated magnetic fields of the respective generating coils are displayed and have the same level.

Figure 7 shows said second setup 53b, wherein the magnetic field generating apparatus 12a is rotated counter-clockwise in respect to the y-axis, said y-axis being perpendicular to the side of the magnetic field generating apparatus 12a. The frequency signal f1 transmitted via the magnetic field of the first coil 13 increases and the signal f3 based on the respective third coil 15 decreases. Dependent on the angle the magnetic field generating apparatus 12a is rotated the signals f2, f4 and f5 slightly decrease, respectively. The signal f1 is the strongest signal and the signal f3 is the weakest signal as shown in the diagram 57b.

Figure 8 shows said third setup 53c, wherein the magnetic field generating apparatus 12a is rotated clockwise in respect to the y-axis. The frequency signal f1 decreases and f3 increases. Dependent on the angle the magnetic field generating apparatus 12a is rotated the signals f2, f4 and f5 slightly decrease, respectively. The signal f3 is the strongest signal and the signal f1 is the weakest signal as shown in the diagram 57c.

Figure 9 shows said fourth setup 53d, wherein the magnetic field generating apparatus 12a is rotated 90 degrees in respect to the z-axis, whereby the open end of the coils or also said symmetry axis point in direction of the y-axis. Dependent on the angle the frequency signals f1, f2, f3, f4 and f5 decrease, whereby the signal f4 decreases the strongest. The signal f5 is the strongest signal and the signal f4 is the weakest signal as shown in the diagram 57d.

Figure 10 shows said fifth setup 53e, wherein the respective top of the magnetic field generating apparatus 12a and the top of the magnetic field receiver device 23b are tilted to each other in respect to the y-axis. The respective tops are pointing at the same point (point not visualised in Figure) in direction of the z-axis. The frequency signals f1 increases and f3 decreases. Dependent on the angle the signals f2, f4 and f5 slightly decreases. The signal f1 is the strongest signal and the signal f3 is the weakest signal as shown in diagram 57e. In comparison to Fig. 7 the signal f1 of Fig. 10 is stronger than the signal f1 of Fig. 7.

When one of the outer coils 13, 16, 15, 17 is moved nearer to the magnetic field receiver device 23a by e.g. rotating as mentioned in one of the Fig. 6 to 9, said coil is generating a magnetic field whose signal induced into the magnetic field receiver device 23a is dominating the other signals of the other outer coils and is larger than the signal level of its reference signal shown in Fig. 6. But eventually at a specific angle and the magnetic field is emitted nearly perpendicular to the magnetic field receiver device 23a, or also said that the symmetry axis of the coil is nearly perpendicular to the axis of the receiving means 23a, the signal will be lower than the level of the reference signal shown in Fig. 6, but is still larger than the other signals.

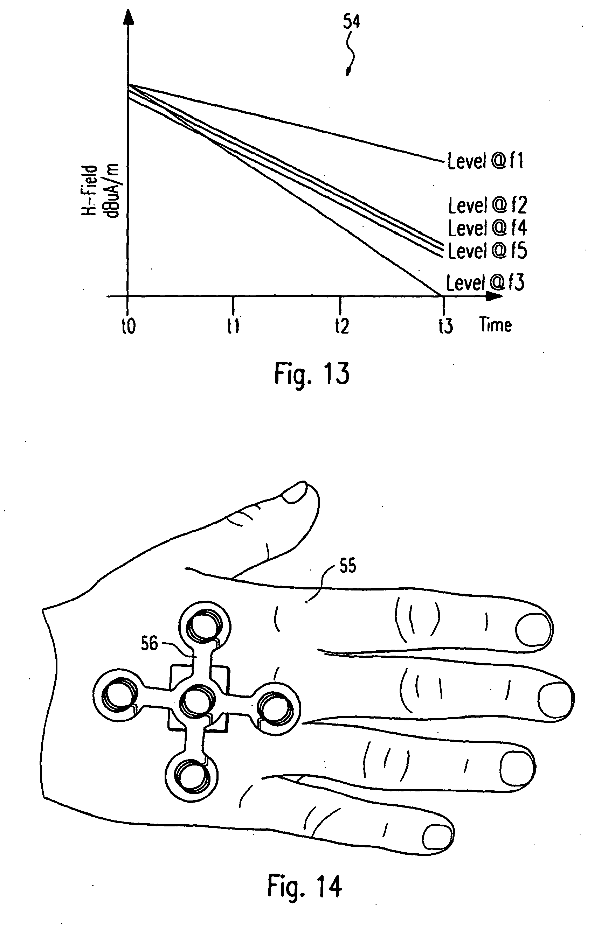

The sequence of the diagrams of the Figures 6, 11 and 12 shows how the H-field (magnetic field) strength changes when the object is moved in the opposite z-axis direction, meaning to the negative numbers. The level at f3 has the strongest decrease, the levels at f2, f4 and f5 decrease to the same amount simultaneously and the level at f1 stays strong for the longest. Based on Figure 13, wherein a linear approximation of the magnetic field strength in dependency of the time is shown, the relative velocity of the magnetic field generating apparatus 12a can be calculated. Depending on the position of the respective generator coil to the receiver coil, the signal can drop faster than other signals of other coils, like e.g. the signal f3 drops faster compared to f1, f2, f4 and f5, when the apparatus 12a goes in the negative z-axis direction. The coil 15 generating the signal f3 is the furthest away from the receiver coil 23a.

Figure 14 shows an example of how an example of a magnetic field generating apparatus 56 could be mounted to a mobile object e.g. the hand 55 in this case. Having the magnetic field generating apparatus 56 in the right hand (as shown) and the magnetic field receiver device in the left hand (not shown) a man-machine interface could be built up for distance, orientation and velocity sensitive control e.g. of a gaming console.

Figure 15 shows a magnetic field generating apparatus 12b comprising three coils 13c, 14c, 15c, whereby the coils 13c, 14c, 15c are all aligned in the same direction, meaning that the symmetry axes are all parallel; additionally the coils are all arranged on the same plane perpendicular to said symmetry axes. The technical features and elements correspond to the ones described in Fig. 4. To get the best resolution when moving or rotating the coil arrangement 12b in a 3-dimensional space, three rotation axes M, N, L have to be provided in a specific way. The first axis N corresponds to the median line between the first and second coil 13c, 14c, the second axis M corresponds to the median line between the second and third coil 14c, 15c and the third axis L runs through the intersection point of the two median lines M, N. The third axis L is perpendicular to the first and second axis N, M and has equal distance to all three coils 13c, 14c, 15c. The larger the angle $\alpha$ is in between the three coils, the greater the distance is getting between the third rotation axis L and the coils, respectively. But the present invention is not restricted to said specific arrangement of the rotation axis. To measure the rotation a receiver device having the same structure as said generating apparatus should be used, whereby all coils are located vis-à-vis in a reference position and have the same frequency resonance except for two outer coils. Said outer coil corresponds to any coil which is not comprising a symmetry axis equal to the rotation axis. Said two outer coils have switched frequency resonance circuits or different signals and are arranged next to each other, so that the direction of the rotation can be identified. In Fig. 15 e.g. coils 13c and 15c of the receiver device can be outer coils operable to detect rotation.

Figure 16 shows an example of an eight setup 53h of a magnetic field measuring system 53, said system 53 being another example comprising a magnetic field generating device 58 and a magnetic field receiver apparatus 59. The magnetic field generating device 58 comprises at least one coil 58a and a pad 58b, while the magnetic field receiver apparatus 59 comprises at least three coils 59a and a pad 59b. The structure of the magnetic field generating device 58 can correspond to the structure of the magnetic field receiver device 23a as described above, but said device 58 is operable to generate a magnetic field modulated with a broadband signal or different frequencies by at least one coil.

The structure of the magnetic field receiver apparatus 59 can correspond to the magnetic field generating apparatus 12a as described above, but said apparatus 59 is operable to receive a magnetic field modulated according to said device 58 by at least three coils 59a.

Eventually any of the above mentioned devices/apparatus can be place or attached on a fixed or a mobile object like on gloves. Also the magnetic field measuring system can comprises at least one of the receiver devices and at least one of the generating devices to provide better and more accurate measurements of the magnetic fields and/or to allow multiple users to be detected and use e.g. a gaming console.

Another embodiment comprises three coils, whereby two coils have the same symmetry axis.

Thus the herein proposed embodiments derive the position, the orientation and the relative velocity of two or more objects relative to each other in a 3-dimensional room by the use of multi-coil and multi-frequency arrangement at the generator side.

The technology background is based on the magnetic field. The magnetic field component H of an electromagnetic transmitter dominates the electric field component E in the nearfield of the transmitter. The limit distance between the nearfield and the so called farfield is depending on the frequency of the transmitter and is defined to be $\lambda/2\pi$, where $\lambda$ is the wavelength. In the nearfield the magnetic field strength, measured in dB$\mu$A/m, drops along the x-axis of a conductor loop transmitter by $1/d^3$, where d is the axial distance from the centre of the conductor loop. This corresponds to a drop in strength of 60 dB per decade of distance. In the farfield after the separation of the field from the antenna only the free space attenuation of the electromagnetic waves is effective. The field strength is proportional to $1/d$, this corresponds to a loss of 20dB per decade of distance.

According to Ampere's law a magnetic field is produced by a current that is flowing through a conductor element, in the case of a circular loop with a radius r and N turns the magnetic field strength B in axial direction at a distance d can be calculated to be

$$B_z = \mu_0 \frac{INr^2}{2(r^2 + d^2)^{3/2}} \approx \mu_0 \frac{INr^2}{2} \frac{1}{d^3} \quad (d^2 >> r^2)$$

A voltage V is induced into a second conductor loop if this is located in the vicinity of the first conducting loop within the time varying magnetic field B (Faradays law). $\Psi$ is the magnetic flux, S the surface area

$$V = -N \frac{d\psi}{dt} = -N \int \bar{B} \bullet d\bar{S}$$

The level of induced voltage is depending on the frequency and strength of the generator current, the distance between the transmitting and the receiving conductor loop, the size and the number of turns of both conducting coils. The quality factor Q is a measure for the selectivity at the frequency of interest.

$$V = 2\pi f SNBQ \cos \alpha$$

Furthermore there is also an orientation dependency; this means that the induced voltage V is depending on the angle of arrival of the B field lines.

The frequency dependency is compared small when the frequencies are close to each other.

After detection of the level of the induced voltage(s) by a resonance circuit, RF processing with suitable means and further post processing (DAC, Derivation) of the received signal information the relative distance and the relative orientation of two or more objects can be derived. Also the change of the magnetic field strength versus time and distance can be derived and information about the velocity (distance vs. time) and acceleration (velocity vs. time) of the conducting loops can be gathered.

## Claims

1. A magnetic field generating apparatus (12a) operable to generate magnetic fields comprising

at least three coils (13, 14, 15) operable to generate a magnetic field, respectively,
wherein each of said coils has a symmetry axis and the symmetry axes of at least two of said coils are parallel
**characterized in that**
said magnetic fields are modulated with different frequencies, respectively,.

2. A magnetic field generating apparatus (12a) according to claim 1,
wherein at least two of said symmetry axes are non-identical.

3. A magnetic field generating apparatus (12a) according to claim 1 or 2,
wherein each of said coils has a plane perpendicular to said symmetry axis, said plane is extending through the bottom of the respective coil and all planes of said coils are arranged to form a common plane, whereby all coils are located on the same side of the common plane.

4. A magnetic field generating apparatus (12a) according to one of the above mentioned claims,
wherein the first and the second coil (13, 14) lie on a first straight line and the second and the third coil (14, 16) lie on a second straight line, whereby the first line is perpendicular to the second line.

5. A magnetic field generating apparatus (12a) according to one of the above mentioned claims,
wherein the first, the second and the third coil (13, 14, 15) lie on a first straight line and the fourth, the second and the fifth coil (16, 14, 17) lie on a second straight line, whereby the first line is perpendicular to the second line.

6. A magnetic field generating apparatus (12a) according to one of the above mentioned claims,
wherein said magnetic field generating apparatus (12a) comprises a pad, said pad being operable to carry said coils (13, 14, 15) at a specific position.

7. A magnetic field generating apparatus (12a) according to claim 6,
wherein said pad comprises
a central pad (20) operable to carry one coil (14),
at least two outer pads (18a, 18b) operable to carry said coils (13, 15), respectively, and
at least two pad conjunctions (19a, 19b) operable to connect to said central pad (20) and said respective outer pads (18a, 18b).

8. A magnetic field generating apparatus (12a) according to claim 6 or 7,
wherein said pad is flexible and/or stretchable and thus placeable on a non-planar surface before the point of a predetermined usage of the magnetic field generating apparatus (12a).

9. A magnetic field generating apparatus (12a) according to one of the above mentioned claims,
wherein at least one coil is operable to provide a uni- or bidirectional communication link by means of said magnetic field.

10. A magnetic field receiver apparatus (59) operable to receive magnetic fields **characterized in that**
said magnetic fields are modulated with different frequencies, respectively, and said magnetic field receiver apparatus (59) comprises
at least three coils (13, 14, 15) operable to receive said magnetic fields and measure the strengths of said magnetic fields,
wherein each of said coils has a symmetry axis and the symmetry axes of at least two of said coils are parallel.

11. A magnetic field receiver apparatus according to claim 10,
wherein at least two of said symmetry axes are non-identical.

12. A magnetic field receiver apparatus (59) according to claim 10 or 11,
wherein each of said coils has a plane perpendicular to said symmetry axis, said plane is extending through the bottom of the respective coil and all planes of said coils are arranged to form a common plane, whereby all coils are located on the same side of the common plane.

13. A magnetic field receiver apparatus (59) according to one of the claims 10 to 12,
wherein the first and the second coil (13, 14) lie on a first straight line and the second and the third coil (14, 16) lie on a second straight line, whereby the first line is perpendicular to the second line.

**14.** A magnetic field receiver apparatus (59) according to one of the claims 10 to 13,
wherein the first, the second and the third coil (13, 14, 15) lie on a first straight line and the fourth, the second and the fifth coil (16, 14, 17) lie on a second straight line, whereby the first line is perpendicular to the second line.

**15.** A magnetic field receiver apparatus (59) according to one of the claims 10 to 14,
wherein said magnetic field receiver apparatus (59) comprises a pad (59b), said pad (59b) being operable to carry said coils at a specific position.

**16.** A magnetic field receiver apparatus according to claim 15,
wherein said pad (59b) comprises
a central pad (20) operable to carry one coil (14),
at least two outer pads (18a, 18b) operable to carry said coils (13, 15), respectively, and
at least two pad conjunctions (19a, 19b) operable to connect to said central pad (20) and said respective outer pads (18a, 18b).

**17.** A magnetic field receiver apparatus (59) according to claim 15 or 16,
wherein said pad (59b) is flexible and/or stretchable and thus placeable on a non-planar surface before the point of an initialisation of the magnetic field receiver apparatus (59), said initialisation determining the magnetic field strengths of said magnetic fields at a reference position.

**18.** A magnetic field receiver apparatus (59) according to one of the claims 10 to 17,
wherein at least one coil is operable to provide a uni- or bidirectional communication link by means of said magnetic field.

**19.** A magnetic field receiver apparatus (59) according to any one of the claims 10 to 19 wherein each coil is operable to measure the strength of a different one of said magnetic fields.

**20.** A magnetic field measuring system (53a) operable to measure a relative position, orientation and/or velocity,
said magnetic field measuring system (53a) comprising
a magnetic field generating apparatus (12a) according to one of the claims 1 to 9 and
a magnetic field receiver device (23a) comprising at least one coil operable to receive the magnetic fields generated by the magnetic field generating apparatus (12a) and measure the strengths of said magnetic fields.

**21.** A magnetic field measuring system (53h) operable to measure a relative position, orientation and/or velocity,
said magnetic field measuring system comprising
a magnetic field generating device (58) comprising at least one coil operable to generate magnetic fields, said magnetic fields being modulated with different frequencies, respectively, and
a magnetic field receiver apparatus (59) according to one of the claims 10 to 19 for receiving the generated magnetic fields.

**22.** A magnetic field measuring system operable to measure a relative position, orientation and/or velocity comprising
a magnetic field generating apparatus (12a) according to any one of the claims 1 to 9 and
a magnetic field receiver apparatus (59) according to any one of the claims 10 to 19.

**23.** A magnetic field measuring system according to claim 22 wherein
said magnetic field receiver apparatus comprises as many coils as said magnetic field generating apparatus and the coils of the magnetic field receiver apparatus are located vis-à-vis to the coils of said magnetic field generating apparatus during the point of an initialisation of said magnetic field receiver device (59), said initialisation determining the strengths of said magnetic fields at a reference position

**Patentansprüche**

**1.** Magnetfelderzeugungsvorrichtung (12a) zur Erzeugung von Magnetfeldern mit
wenigstens drei Spulen (13, 14, 15) zur Erzeugung jeweils eines Magnetfeldes, wobei jede der Spulen eine Symmetrieachse aufweist und die Symmetrieachsen von wenigstens zwei der Spulen parallel zueinander sind,
**dadurch gekennzeichnet, dass**
die Magnetfelder mit jeweils unterschiedlichen Frequenzen moduliert sind.

**2.** Magnetfelderzeugungsvorrichtung (12a) gemäß Anspruch 1,
wobei wenigstens zwei der Symmetrieachsen nicht identisch sind.

**3.** Magnetfelderzeugungsvorrichtung (12a) gemäß Anspruch 1 oder 2,
wobei jede der Spulen eine zu der Symmetrieachse senkrechte Ebene aufweist, wobei die Ebene sich durch die Unterseite der jeweiligen Spule erstreckt und alle Ebenen der Spulen so angeordnet sind, dass sie eine gemeinsame Ebene bilden, wobei alle Spulen auf derselben Seite der gemeinsamen Ebene angeordnet sind.

**4.** Magnetfelderzeugungsvorrichtung (12a) gemäß einem der vorhergehenden Ansprüche,
wobei die erste und zweite Spule (13, 14) auf einer ersten geraden Linie liegen und die zweite und dritte Spule (14, 16) auf einer zweiten geraden Linie liegen, wobei die erste Linie senkrecht zu der zweiten Linie ist.

**5.** Magnetfelderzeugungsvorrichtung (12a) gemäß einem der vorstehenden Ansprüche,
wobei die erste, die zweite und die dritte Spule (13, 14, 15) auf einer ersten geraden Linie liegen und die vierte, die zweite und die fünfte Spule (16, 14, 17) auf einer zweiten geraden Linie liegen, wobei die erste Linie senkrecht zu der zweiten Linie ist.

**6.** Magnetfelderzeugungsvorrichtung (12a) gemäß einem der vorstehenden Ansprüche,
wobei die Magnetfelderzeugungsvorrichtung (12a) ein Pad aufweist, wobei das Pad ausgestaltet ist, die Spulen (13, 14, 15) an einer bestimmten Position zu tragen.

**7.** Magnetfelderzeugungsvorrichtung (12a) gemäß Anspruch 6,
wobei das Pad umfasst
ein zentrales Pad (20) zum Tragen einer Spule (14),
wenigstens zwei äußere Pads (18a, 18b) zum Tragen jeweils der Spulen (13, 15), und
wenigstens zwei Pad-Verbindungen (19a, 19b) zum Verbinden des zentralen Pads (20) und der jeweiligen äußeren Pads (18a, 18b).

**8.** Magnetfelderzeugungsvorrichtung (12a) gemäß Anspruch 6 oder 7,
wobei das Pad flexibel und/oder dehnbar ist und dadurch auf einer unebenen Oberfläche platzierbar ist vor dem Zeitpunkt einer vorbestimmten Nutzung der Magnetfelderzeugungsvorrichtung (12a).

**9.** Magnetfelderzeugungsvorrichtung (12a) gemäß einem der vorstehenden Ansprüche,
wobei wenigstens eine Spule zur Bereitstellung einer uni- oder bidirektionalen Kommunikationsverbindung mit Hilfe des Magnetfeldes ausgestaltet ist.

**10.** Magnetfeldempfangsvorrichtung (59) zum Empfang von Magnetfeldern,
**dadurch gekennzeichnet, dass**
die Magnetfelder mit jeweils unterschiedlichen Frequenzen moduliert sind und
die Magnetfeldempfangsvorrichtung (59) umfasst wenigstens drei Spulen (13, 14, 15) zum Empfang der Magnetfelder und zur Messung der Stärke der Magnetfelder,
wobei jede der Spulen eine Symmetrieachse aufweist und die Symmetrieachsen von wenigstens zwei der Spulen parallel zueinander sind.

**11.** Magnetfeldempfangsvorrichtung gemäß Anspruch 10,
wobei wenigstens zwei Symmetrieachsen nicht identisch sind.

**12.** Magnetfeldempfangsvorrichtung (59) gemäß Anspruch 10 oder 11,
wobei jede der Spulen eine zu der Symmetrieachse senkrechte Ebene aufweist, wobei die Ebene sich durch die Unterseite der jeweiligen Spule erstreckt und alle Ebenen der Spulen so angeordnet sind, dass sie eine gemeinsame Ebene bilden, wobei alle Spulen auf derselben Seite der gemeinsamen Ebene angeordnet sind.

**13.** Magnetfeldempfangsvorrichtung (59) gemäß einem der Ansprüche 10 bis 12, wobei die erste und zweite Spule (13, 14) auf einer ersten geraden Linie liegen und die zweite und dritte Spule (14, 16) auf einer zweiten geraden Linie liegen, wobei die erste Linie senkrecht zu der zweiten Linie ist.

**14.** Magnetfeldempfangsvorrichtung (59) gemäß einem der Ansprüche 10 bis 13, wobei die erste, die zweite und die dritte Spule (13, 14, 15) auf einer ersten geraden Linie liegen und die vierte, die zweite und die fünfte Spule (16, 14, 17) auf einer zweiten geraden Linie liegen, wobei die erste Linie senkrecht zu der zweiten Linie ist.

**15.** Magnetfeldempfangsvorrichtung (59) gemäß einem der Ansprüche 10 bis 14, wobei die Magnetfeldempfangsvorrichtung (59) ein Pad (59b) aufweist, wobei das Pad (59b) vorgesehen ist, die Spulen an einer bestimmten Position zu tragen.

**16.** Magnetfeldempfangsvorrichtung (59) gemäß Anspruch 15,
wobei das Pad (59b) umfasst
ein zentrales Pad (20) zum Tragen einer Spule (14),
wenigstens zwei äußere Pads (18a, 18b) zum Tragen jeweils der Spulen (13, 15), und
wenigstens zwei Pad-Verbindungen (19a, 19b) zum Verbinden des zentralen Pads (20) und der jeweiligen äußeren Pads (18a, 18b).

**17.** Magnetfeldempfangsvorrichtung (59) gemäß Anspruch 15 oder 16,
wobei das Pad (59b) flexibel und/oder dehnbar ist und dadurch auf einer unebenen Oberfläche platzierbar ist vor dem Zeitpunkt einer Initialisierung der Magnetfeldempfangsvorrichtung (59), wobei die Initialisierung die Magnetfeldstärken der Magnetfelder bei einer Referenzposition bestimmt.

**18.** Magnetfeldempfangsvorrichtung (59) gemäß einem der Ansprüche 10 bis 17,
wobei wenigstens eine Spule zur Bereitstellung einer uni- oder bidirektionalen Kommunikationsverbindung mit Hilfe des Magnetfeldes ausgestaltet ist.

**19.** Magnetfeldempfangsvorrichtung (59) gemäß einem der Ansprüche 10 bis 19,
wobei jede Spule zur Messung der Stärke eines unterschiedlichen der Magnetfelder ausgestaltet ist.

**20.** Magnetfeldmesssystem (53a) zur Messung einer relativen Position, Orientierung und/oder Geschwindigkeit,
wobei das Magnetfeldmesssystem (53a) umfasst eine Magnetfelderzeugungsvorrichtung (12a) gemäß einem der Ansprüche 1 bis 9 und
ein Magnetfeldempfangsgerät (23a) mit einer Spule zum Empfang der von der Magnetfelderzeugungsvorrichtung (12a) erzeugten Magnetfelder und zur Messung der Stärke der Magnetfelder.

**21.** Magnetfeldmesssystem (53h) zur Messung einer relativen Position, Orientierung und/oder Geschwindigkeit,
wobei das Magnetfeldmesssystem umfasst,
ein Magnetfelderzeugungsgerät (58) mit wenigstens einer Spule zur Erzeugung von Magnetfeldern, wobei die Magnetfelder mit jeweils unterschiedlichen Frequenzen moduliert sind, und
eine Magnetfeldempfangsvorrichtung (59) gemäß einem der Ansprüche 10 bis 19 zum Empfang der erzeugten Magnetfelder.

**22.** Magnetfeldmesssystem zur Messung einer relativen Position, Orientierung und/oder Geschwindigkeit mit
einer Magnetfelderzeugungsvorrichtung (12a) gemäß einem der Ansprüche 1 bis 9 und
einer Magnetfeldempfangsvorrichtung (59) gemäß einem der Ansprüche 10 bis 19.

**23.** Magnetfeldmesssystem gemäß Anspruch 22, wobei
die Magnetfeldempfangsvorrichtung so viele Spulen aufweist wie die Magnetfelderzeugungsvorrichtung und
die Spulen der Magnetfeldempfangsvorrichtung gegenüber den Spulen der Magnetfelderzeugungsvorrichtung während des Zeitpunkts einer Initialisierung des Magnetfeldempfangsgerätes (59) angeordnet sind, wobei die Initialisierung die Stärken der Magnetfelder an einer Referenzposition bestimmt.

**Revendications**

**1.** Appareil de génération de champ magnétique (12a) pouvant être utilisé pour générer des champs magnétiques, comprenant :

au moins trois bobines (13, 14, 15) pouvant être utilisées pour générer un champ magnétique, respectivement, dans lequel chacune desdites bobines a un axe de symétrie et les axes de symétrie d'au moins deux desdites bobines sont parallèles,
**caractérisé en ce que**

lesdits champs magnétiques sont modulés avec différentes fréquences, respectivement.

2. Appareil de génération de champ magnétique (12a) selon la revendication 1,
   dans lequel au moins deux desdits axes de symétrie ne sont pas identiques.

3. Appareil de génération de champ magnétique (12a) selon la revendication 1 ou 2,
   dans lequel chacune desdites bobines a un plan perpendiculaire audit axe de symétrie, ledit plan s'étendent à travers la partie inférieure de la bobine respective et tous les plans desdites bobines sont agencés pour former un plan commun, moyennant quoi toutes les bobines sont situées du même côté du plan commun.

4. Appareil de génération de champ magnétique (12a) selon l'une des revendications susmentionnées,
   dans lequel les première et deuxième bobines (13, 14) se trouvent sur une première droite et les deuxième et troisième bobines (14, 16) se trouvent sur une deuxième droite, moyennant quoi la première droite est perpendiculaire à la deuxième droite.

5. Appareil de génération de champ magnétique (12a) selon l'une des revendications susmentionnées,
   dans lequel les première, deuxième et troisième bobines (13, 14, 15) se trouvent sur une première droite et les quatrième, deuxième et cinquième bobines (16, 14, 17) se trouvent sur une deuxième droite, moyennant quoi la première droite est perpendiculaire à la deuxième droite.

6. Appareil de génération de champ magnétique (12a) selon l'une des revendications susmentionnées,
   dans lequel ledit appareil de génération de champ magnétique (12a) comprend une pastille, ladite pastille pouvant être utilisée pour supporter lesdites bobines (13, 14, 15) à une position spécifique.

7. Appareil de génération de champ magnétique (12a) selon la revendication 6,
   dans lequel ladite pastille comprend
   une pastille centrale (20) pouvant être utilisée pour supporter une bobine (14),
   au moins deux pastilles externes (18a, 18b) pouvant être utilisées pour supporter lesdites bobines (13, 15), respectivement, et
   au moins deux conjonctions de pastilles (19a, 19b) aptes à relier ladite pastille centrale (20) et les dites pastilles externes (18a, 18b) respectives.

8. Appareil de génération de champ magnétique (12a) selon la revendication 6 ou 7,
   dans lequel ladite pastille est flexible et/ou étirable et peut ainsi être placée sur une surface non plane avant l'instant d'une utilisation prédéterminée de l'appareil de génération de champ magnétique (12a).

9. Appareil de génération de champ magnétique (12a) selon l'une des revendications susmentionnées,
   dans lequel au moins une bobine peut être utilisée pour réaliser une liaison de communication unidirectionnelle ou bidirectionnelle au moyen dudit champ magnétique.

10. Appareil de réception de champ magnétique (59) pouvant être utilisé pour recevoir des champs magnétiques,
    **caractérisé en ce que**
    lesdits champs magnétiques sont modulés avec différentes fréquences, respectivement, et ledit appareil de réception de champ magnétique (59) comprend
    au moins trois bobines (13, 14, 15) pouvant être utilisées pour recevoir lesdits champs magnétiques et mesurer les intensités desdits champs magnétiques,
    dans lequel chacune desdites bobines a un axe de symétrie et les axes de symétrie d'au moins deux desdites bobines sont parallèles.

11. Appareil de réception de champ magnétique selon la revendication 10,
    dans lequel au moins deux desdits axes de symétrie ne sont pas identiques.

12. Appareil de réception de champ magnétique (59) selon la revendication 10 ou 11,
    dans lequel chacune desdites bobines a un plan perpendiculaire audit axe de symétrie, ledit plan s'étendent à travers la partie inférieure de la bobine respective et tous les plans desdites bobines sont agencés pour former un plan commun, moyennant quoi toutes les bobines sont situées du même côté du plan commun.

13. Appareil de réception de champ magnétique (59) selon l'une des revendications 10 à 12,

dans lequel les première et deuxième bobines (13, 14) se trouvent sur une première droite et les deuxième et troisième bobines (14, 16) se trouvent sur une deuxième droite, moyennant quoi la première droite est perpendiculaire à la deuxième droite.

14. Appareil de réception de champ magnétique (59) selon l'une des revendications 10 à 13,
dans lequel les première, deuxième et troisième bobines (13, 14, 15) se trouvent sur une première droite et les quatrième, deuxième et cinquième bobines (16, 14, 17) se trouvent sur une deuxième droite, moyennant quoi la première droite est perpendiculaire à la deuxième droite.

15. Appareil de réception de champ magnétique (59) selon l'une des revendications 10 à 14,
dans lequel ledit appareil de réception de champ magnétique (59) comprend une pastille (59b), ladite pastille (59b) pouvant être utilisée pour supporter lesdites bobines à une position spécifique.

16. Appareil de réception de champ magnétique selon la revendication 15,
dans lequel ladite pastille (59b) comprend une pastille centrale (20) pouvant être utilisée pour supporter une bobine (14),
au moins deux pastilles externes (18a, 18b) pouvant être utilisées pour supporter lesdites bobines (13, 15), respectivement, et
au moins deux conjonctions de pastilles (19a, 19b) aptes à relier ladite pastille centrale (20) et les dites pastilles externes (18a, 18b) respectives.

17. Appareil de réception de champ magnétique (59) selon la revendication 15 ou 16,
dans lequel ladite pastille (59b) est flexible et/ou étirable et peut ainsi être placée sur une surface non plane avant l'instant d'une initialisation de l'appareil de réception de champ magnétique (59), ladite initialisation déterminant les intensités de champ magnétique desdits champs magnétiques à une position de référence.

18. Appareil de réception de champ magnétique (59) selon l'une des revendications 10 à 17,
dans lequel au moins une bobine peut être utilisée pour réaliser une liaison de communication unidirectionnelle ou bidirectionnelle au moyen dudit champ magnétique.

19. Appareil de réception de champ magnétique (59) selon l'une quelconque des revendications 10 à 19, dans lequel chaque bobine peut être utilisée pour mesurer l'intensité d'un champ magnétique différent parmi lesdits champs magnétiques.

20. Système de mesure de champ magnétique (53a) pouvant être utilisé pour mesurer une position, une orientation et/ou une vitesse relatives,
ledit système de mesure de champ magnétique (53a) comprenant
un appareil de génération de champ magnétique (12a) selon l'une des revendications 1 à 9, et
un dispositif de réception de champ magnétique (23a) comprenant au moins une bobine pouvant être utilisée pour recevoir les champs magnétiques générés par l'appareil de génération de champ magnétique (12a) et mesurer les intensités desdits champs magnétiques.

21. Système de mesure de champ magnétique (53h) pouvant être utilisé pour mesurer une position, une orientation et/ou une vitesse relatives,
ledit système de mesure de champ magnétique comprenant
un dispositif de génération de champ magnétique (58) comprenant au moins une bobine pouvant être utilisée pour générer des champs magnétiques, lesdits champs magnétiques étant modulés avec différentes fréquences, respectivement, et
un appareil de réception de champ magnétique (59) selon l'une des revendications 10 à 19 pour recevoir les champs magnétiques générés.

22. Système de mesure de champ magnétique pouvant être utilisé pour mesurer une position, une orientation et/ou une vitesse relatives comprenant
un appareil de génération de champ magnétique (12a) selon l'une quelconque des revendications 1 à 9 et
un appareil de réception de champ magnétique (59) selon l'une quelconque des revendications 10 à 19.

23. Système de mesure de champ magnétique selon la revendication 22, dans lequel
ledit appareil de réception de champ magnétique comprend autant de bobines que ledit appareil de génération de champ magnétique, et

les bobines de l'appareil de réception de champ magnétique sont situées en face des bobines dudit appareil de génération de champ magnétique à l'instant d'une initialisation dudit appareil de réception de champ magnétique (59), ladite initialisation déterminant les intensités desdits champs magnétiques à une position de référence.

Mutual coupling between coils 3

Conducting Means (Transmitter)

Conducting Means (Receiver)

Magnetic field lines

4

2 2a

1a 1

Distance d

**Fig. 1**

Nearfield    Farfield

Field Strenght H (dBuA/m)

0

−20

−40

−60

−80

6

7

5

0.1    1    10

Distance (m)

**Fig. 2**

Fig. 3

Fig. 4

Fig. 5

Fig. 6

Fig. 7

Fig. 8

Fig. 9

Fig. 10

Fig. 11

Fig. 12

54

H.-Field dBuA/m

Level @ f1
Level @ f2
Level @ f4
Level @ f5
Level @ f3

t0    t1    t2    t3    Time

Fig. 13

55
56

Fig. 14

13c

12b

15c

α   L

14c

N

M

Fig. 15

58                    59

58b                   59b

58a                   59a

53h                   Fig. 16

**EP 1 944 581 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004065896 A1
- US 6701179 B